# DEMANDE DE BREVET EUROPEEN

(11) **EP 1 283 600 A1**
(43) Date de publication de la demande: **12.02.2003**
(21) Numéro de dépôt: 02291764.5
(22) Date de dépôt: 12.07.2002
(51) Int. Cl.: H04B 1/40, H04B 1/48

(54) **Système d'émission/réception pour téléphone mobile multibande et multimode**

(30) Priorité: 09.08.2001 FR 0110833
(71) Demandeur: SAGEM S.A., 75015 Paris (FR)
(72) Inventeur: Romao, Fernando, 78360 Montesson (FR)
(74) Mandataire: Maillet, Alain

(57) **Abrégé**

L'invention concerne un système d'émission/ réception pour un terminal mobile apte à pouvoir émettre et recevoir dans au moins une première et une seconde bandes de fréquence, chacune desdites bandes de fréquence comprenant une sous-bande d'émission et une sous-bande de réception. Le système comprend au moins un module hybride de duplexage/ diplexage (430) adapté à séparer, sur une première voie (431), une sous-bande de réception de ladite première bande de fréquence et, sur une seconde voie (432), une bande composite incluant ladite seconde bande de fréquence ainsi qu'une sous-bande d'émission de ladite première bande de fréquence, la seconde voie étant reliée à la voie commune d'un diplexeur (415).

## Description

La présente invention concerne de manière générale un dispositif d'émission/réception multibande. Elle s'applique en particulier à un terminal de télécommunication multibande pouvant opérer en mode UMTS compressé.

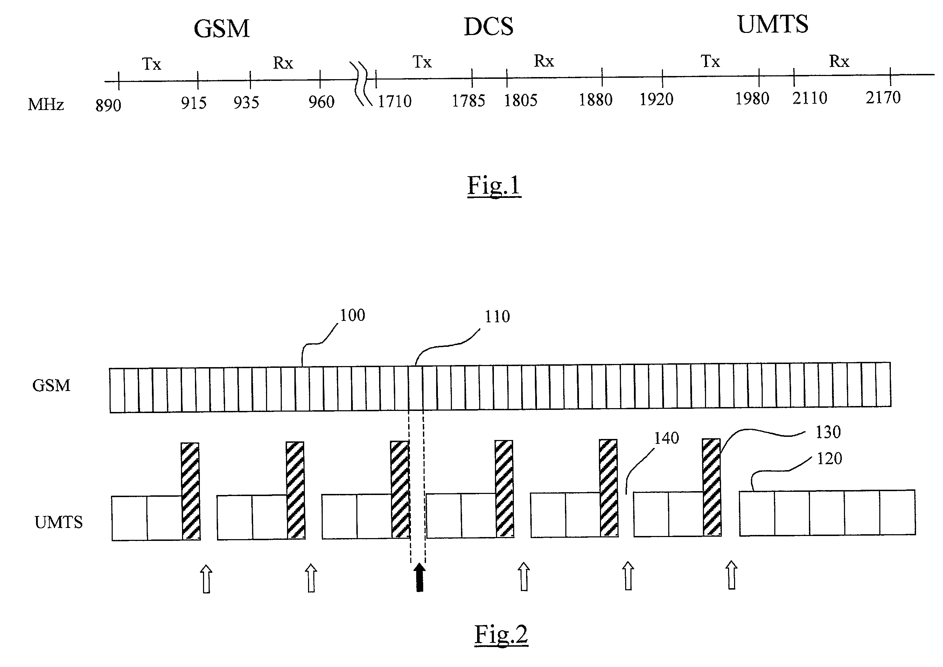

Pour des raisons de coût, le déploiement du système de téléphonie mobile UMTS (Universal Mobile Telecommunication Sytem) ne pourra se faire que progressivement. En absence de couverture UMTS complète, il sera nécessaire d'assurer la mobilité entre l'UMTS et les systèmes existants notamment les systèmes GSM (Global System for Mobile communication) et DCS 1800 (que nous désignerons ci-après simplement par DCS). Cette mobilité inter-système devra permettre aux usagers de passer du système UMTS au système GSM ou DCS et réciproquement, non seulement en mode veille (re-sélection) mais aussi en cours de communication (hand-over inter-système). Les bandes de fréquence utilisées par les système précités sont indiqués en Fig. 1. Ainsi, un terminal mobile GSM transmet (sur la voie montante) dans la bande 890-915 MHz et reçoit (sur la voie descendante) dans la bande 935-960 MHz avec un espacement du duplex de 45 MHz. De même, un terminal DCS transmet dans la bande 1710-1785 MHz et reçoit dans la bande 1805-1880 MHz. Enfin, la voie montante de l'UMTS/ FDD (Frequency Division Duplex) occupe la bande 1920-1980 MHz alors que la voie descendante occupe la bande 2110-2170 MHz.

Le choix de connexion à tel ou tel système suppose que le terminal mobile soit capable d'effectuer des mesures dans plusieurs bandes de réception A cette fin, il est prévu dans le système UMTS/ FDD des « trous » dans la transmission de données sur la voie descendante de manière à ce qu'un terminal mobile puisse effectuer des mesures dans la bande GSM ou DCS pendant qu'il est en cours de communication en mode UMTS/ FDD. Ce mode de transmission particulier est appelé mode compressé. En raison de la proximité de la bande de réception DCS (Rx DCS) et de la bande transmission UMTS (Tx UMTS), il est également prévu un mode compressé sur la voie montante UMTS. Dans ce cas, les trous de transmission affectent simultanément les deux voies. La Fig. 2 illustre le mode transmission compressé en UMTS/ FDD et son utilisation pour des mesures en réception GSM. Selon ce mode, des trous de transmission de la taille de 1 à 7 intervalles de transmission (IT) sont créés dans la trame UMTS qui en comporte 15. Sur la Fig. 2, la référence 140 indique un trou de transmission et 120 une trame normale. Un trou de transmission est obtenu en comprimant une trame normale dans une durée réduite, par exemple en réduisant le facteur d'étalement (Spreading Factor) pour ladite trame. Afin de maintenir la qualité de la communication, une trame compressée, telle que celle repésentée en 130, est émise, comme ilustré sur la Fig., avec une puissance d'émission supérieure à celle d'une trame normale.

En mode compressé, le système mesure pendant les trous de transmission le niveau sur le canal BCCH (Broadcast Control CHannel) d'une cellule GSM. Etant donné que les trames GSM, 100, ne sont pas synchrones avec les trames UMTS, la mesure n'est pas possible à chaque trou de transmission. On a représenté par une flèche noire une mesure sur le canal BCCH pendant une correspondance temporelle entre une trame GSM, 110, et un trou de transmission.

L'augmentation de la puissance d'émission pendant une trame compressée peut avoir des conséquences particulièrement néfastes. Tout d'abord elle augmente le niveau d'interférence intra-cellulaire, ce qui est préjudiciable à la qualité des communications. Ensuite, elle perturbe la boucle de contrôle de puissance d'émission du terminal mobile et peut conduire à des instabilités et à des oscillations de puissance . Il serait donc souhaitable que, lors d'un trou de transmission sur la voie descendante, la transmission (Tx-UMTS) sur la voie montante ne soit pas interrompue. Bien que la norme UMTS autorise un tel fonctionnement, les systèmes d'émission/ réception multibande de l'état de la technique ne permettent pas de l'exploiter pleinement. En particulier, comme nous le verrons plus loin, ils ne permettent pas d'effectuer une mesure dans la bande de réception DCS et de transmettre simultanément en mode UMTS. Autrement dit, une mesure dans la bande DCS suppose actuellement que la voie montante opère également en mode compressé.

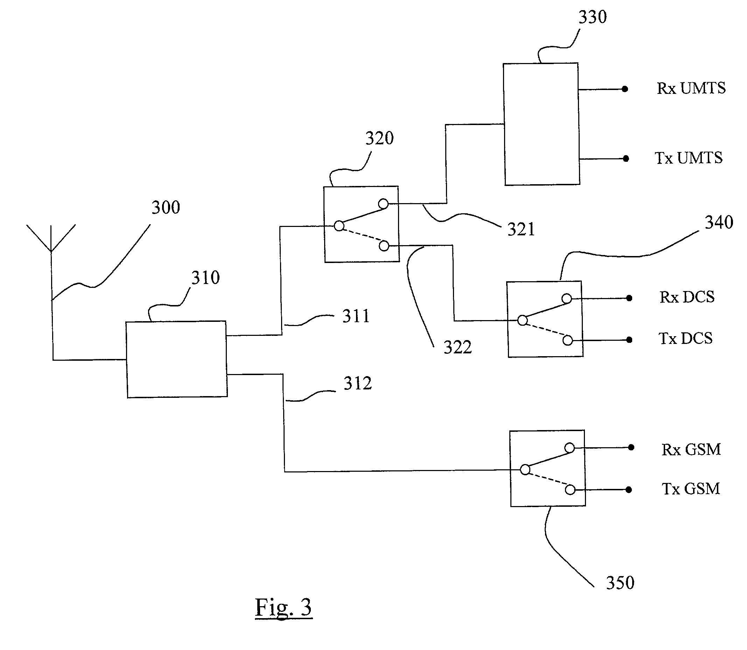

La Fig. 3 représente un système d'émission/réception tri-bande connu de l'état de la technique. Ce système peut fonctionner alternativement en mode GSM, en mode DCS ou en mode UMTS. Un diplexeur 310, relié à l'antenne 300, sépare la bande GSM (890-960 MHz) des bandes DCS et UMTS (1710-2170 MHz). On rappelle qu'un diplexeur est un dispositif permettant à deux systèmes d'émission/réception distincts opérant dans des bandes fréquentielles disjointes d'utiliser simultanément la même antenne. Un diplexeur est typiquement constitué de deux filtres passe-bande correspondant respectivement aux bandes d'émission/ réception des deux systèmes. En général, ces filtres n'ont pas besoin d'être très sélectifs car les bandes en question sont éloignées l'une de l'autre. Par exemple, dans le cas présent, la bande GSM est éloignée de plus de 750 MHz des bandes DCS et UMTS. La sortie 312 du diplexeur, correspondant à la bande de plus basse fréquence, c'est-à-dire au signal GSM, est connectée au point commun d'un premier commutateur 350 dit à « une entrée / deux sorties » ou encore SPDT (pour Single Pole Double Throw). Ce commutateur est en fait un duplexeur temporel : le point commun (ou « entrée ») est relié, selon l'état du commutateur, soit à l'entrée (notée Rx GSM) du récepteur GSM, soit à la sortie (notée Tx GSM) de l'émetteur GSM. Le commutateur 350 permet d'éliminer l'influence du circuit de réception GSM lors de l'émission GSM.

La sortie 311 du diplexeur 310 correspondant à la bande de plus haute fréquence, c'est-à-dire aux signaux DCS et UMTS, est connectée au point commun d'un second commutateur 320, également du type à « une entrée/ deux sorties ». Selon l'état du commutateur 320, la sortie 311 est reliée au point commun 322 d'un duplexeur 330 ou au point commun 321 d'un troisième commutateur 340. On rappelle qu'un duplexeur est un dispositif permettant à une voie d'émission et une voie de réception de partager simultanément une même antenne (ici via le commutateur 320 et le diplexeur 310). Un duplexeur peut opérer dans le domaine fréquentiel (par ex. duplexeur 330) ou dans le domaine temporel (par ex. commutateur 340). Le duplexeur 330 assure à la fois la transmission du signal d'antenne à l'entrée (notée Rx UMTS) du récepteur UMTS et la transmission sur l'antenne du signal de sortie (notée Tx UMTS) de l'émetteur UMTS. D'autre part, le point commun du troisième commutateur 340 est relié, selon l'état de ce dernier, soit à l'entrée (notée Rx DCS) d'un récepteur DCS, soit à la sortie (notée Tx DCS) d'un émetteur DCS.

Le système d'émission/ réception représenté autorise à la fois une réception dans la bande GSM et une émission dans la bande UMTS. En effet, lorsque les commutateurs 320 et 350 sont dans la position indiquée sur la Fig., il est possible, d'une part, de transmettre un signal dans la bande UMTS via le duplexeur 330, le commutateur 320 et le diplexeur 310 et, d'autre part, de recevoir un signal dans la bande GSM à travers le diplexeur 310 et le commutateur 350. En revanche, la présence du commutateur 320 ne permet pas au système d'émission/ réception à la fois de transmettre dans la bande UMTS et de recevoir dans la bande DCS.

Le but de l'invention est de proposer un système d'émission/ réception capable de fonctionner dans la bande UMTS comme dans la bande DCS et permettant d'effectuer une mesure dans la bande de réception DCS sans avoir à interrompre la transmission sur la voie montante UMTS.

De manière plus générale, l'objectif de l'invention est de proposer un système d'émission réception multi-standard permettant de transmettre dans une bande d'émission d'un standard et de recevoir dans une bande de réception d'un autre standard.

Cet objectif est réalisé par un système d'émission/ réception pour un terminal mobile apte à pouvoir émettre et recevoir dans au moins une première et une seconde bandes de fréquence, chacune desdites bandes de fréquence comprenant une sous-bande d'émission et une sous-bande de réception, ledit système comprenant au moins un module hybride de duplexage/ diplexage adapté à séparer sur une première voie la sous-bande de réception de ladite première bande de fréquence et, sur une seconde voie une bande composite comprenant ladite seconde bande de fréquence ainsi que la sous-bande d'émission de ladite première bande de fréquence, la seconde voie étant reliée à la voie commune d'un diplexeur.

Selon une variante de réalisation, ledit diplexeur est adapté à séparer sur une première voie la sous-bande d'émission de ladite première bande de fréquence et, sur une seconde voie, ladite seconde bande de fréquence, ladite première voie étant reliée à la sortie d'un émetteur dans la première bande de fréquence.

Avantageusement, la seconde voie dudit diplexeur est reliée à l'entrée d'un commutateur du type à « une entrée/ deux sorties », les sorties du commutateur étant respectivement connectées à un émetteur et un récepteur dans la seconde bande de fréquence.

Le système peut comprendre en outre un premier et un second commutateurs de type « marche/arrêt » sur la première et la seconde voies du diplexeur, le premier commutateur étant ouvert et le second fermé lorsque le terminal mobile fonctionne dans la seconde bande de fréquence, le premier commutateur étant fermé et le second ouvert lorsque le terminal mobile fonctionne dans la première bande de fréquence, les deux commutateurs étant fermés lorsque le terminal mobile effectue des mesures dans la seconde bande de fréquence en émettant dans la première bande de fréquence.

Avantageusement, ledit diplexeur peut présenter sur sa seconde voie une fonction de transfert commutable entre celle d'un premier filtre passe-bande laissant passer la seconde bande de fréquence et celle d'un second filtre passe-bande laissant seulement passer la sous-bande de réception de la seconde bande de fréquence, ladite fonction de transfert étant celle du premier filtre lorsque le terminal mobile fonctionne dans la seconde bande de fréquence et celle du second filtre lorsque le terminal effectue des mesures dans la seconde bande de fréquence en émettant dans la première bande de fréquence.

Selon une autre variante de réalisation, le diplexeur présente sur une première voie une fonction de transfert commutable entre celle d'un premier filtre passe-bande laissant passer la première bande de fréquence ou seulement la sous-bande d'émission de cette dernière et celle d'un second filtre passe-bande laissant seulement passer la sous-bande d'émission la seconde bande de fréquence.

Avantageusement, ladite fonction de transfert est commutée sur celle du premier filtre lorsque le terminal mobile fonctionne dans la première bande de fréquence ou émet dans cette dernière en effectuant des mesures dans la seconde bande de fréquence et est commutée sur celle du second filtre lorsque le terminal mobile fonctionne dans la seconde bande de fréquence.

Selon cette variante, le diplexeur peut alors comporter sur sa seconde voie un commutateur de type « marche/ arrêt», le commutateur étant fermé lorsque le terminal mobile fonctionne dans la seconde bande de fréquence ou lorsqu'il effectue des mesures dans la seconde bande de fréquence en émettant dans la première bande de fréquence et ouvert lorsqu'il fonctionne dans la première bande de fréquence.

Le diplexeur est réalisé au moyen de filtres à ondes de surface ou de filtres diélectriques.

Par exemple, la première bande de fréquence est la bande UMTS et la seconde bande de fréquence est la bande DCS. Le module hybride de duplexage/ diplexage pourra alors être constitué d'un duplexeur UMTS.

Le système peut comprendre en outre un second diplexeur adapté à séparer sur une première voie la bande DCS/UMTS et sur une seconde voie la bande GSM, ladite première voie étant reliée à la voie commune du duplexeur UMTS.

Ladite seconde voie du second diplexeur est avantageusement reliée à l'entrée d'un commutateur du type à « une entrée/ deux sorties », laissant passer soit un signal d'émission GSM soit un signal de réception GSM.

Les première et seconde voies du second diplexeur peuvent être également pourvues de commutateurs de type « marche/ arrêt ».

Les caractéristiques de l'invention mentionnées ci-dessus, ainsi que d'autres, apparaîtront plus clairement à la lecture de la description d'exemples de réalisation, faite en relation avec les figures jointes parmi lesquelles :
La Fig. 1 représente schématiquement les bandes des systèmes GSM, DCS et UMTS;
La Fig. 2 illustre une mesure dans la bande de réception GSM lorsque le terminal mobile opère en mode UMTS compressé ;
La Fig. 3 représente schématiquement un système d'émission/ réception multibande connu de l'état de la technique;
La Fig. 4 représente un système d'émission/ réception multibande selon un premier mode de réalisation de l'invention ;
La Fig. 5 représente les caractéristiques d'un diplexeur utile au premier mode de réalisation de l'invention ;
La Fig. 6 représente les caractéristiques d'un autre diplexeur utile au premier mode de réalisation de l'invention ;
La Fig. 7 représente un système d'émission/ réception multibande selon un second mode de réalisation de l'invention ;
La Fig. 8 représente les caractéristiques d'un diplexeur utile au second mode de réalisation de l'invention ;
La Fig. 9 représente la structure d'un diplexeur connu de l'état de la technique ;
La Fig. 10 représente une modification dudit diplexeur utile à la réalisation de l'invention ;
La Fig. 11A représente un diplexeur équipé de commutateurs sur ses différentes voies, utile à une variante de réalisation de l'invention ;
La Fig. 11B représente un exemple de réalisation du diplexeur équipé de commutateurs de la Fig. 11A ;
La Fig. 12 représente un diplexeur équipé d'un commutateur sur une de ses voies, utile à une variante de réalisation de l'invention.

L'idée à la base de l'invention est de prévoir dans le système d'émission/réception un module hybride de duplexage/diplexage en série avec un diplexeur à forte séléctivité fréquentielle. Cette architecture permet de séparer, comme on le verra plus loin, les différentes bandes de fonctionnement du système d'émission/ réception multibande.

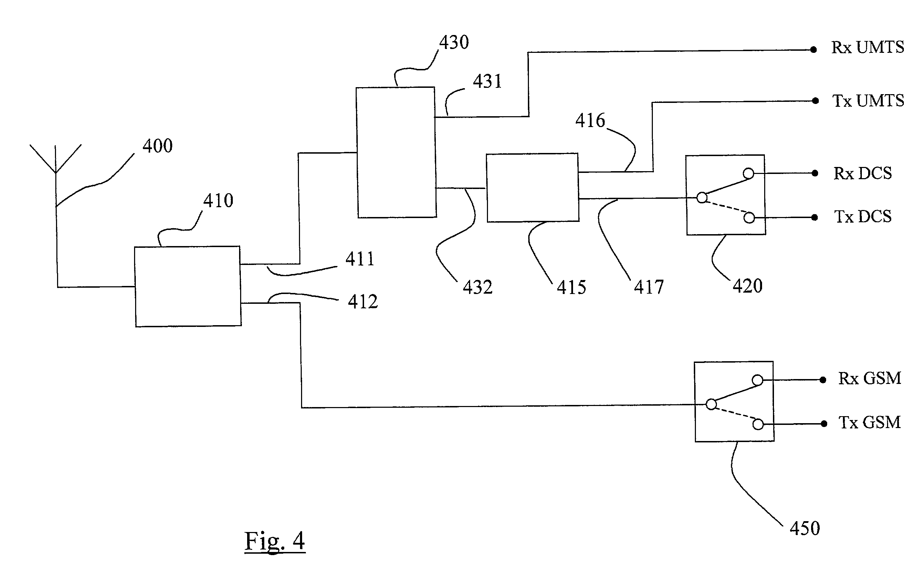

Un système d'émission/ réception multibande GSM/DCS/UMTS selon un premier mode de réalisation de l'invention est représenté en Fig. 4. Le sytème comprend un premier diplexeur 410 connecté à l'antenne 400 ayant pour fonction de séparer la bande GSM de la bande DCS/UMTS. Comme on l'a vu plus haut, les filtres passe-bande de ce diplexeur n'ont pas besoin d'être très sélectifs étant donné l'éloignement des bandes GSM d'une part et DCS/UMTS d'autre part. La voie de plus basse fréquence, 412, du diplexeur 410 est connectée au point commun (ou « entrée ») d'un commutateur 450 du type « une entrée/ deux sorties », les « sorties » du commutateur 450 étant reliées respectivement à l'entrée d'un récepteur GSM (Rx GSM) et à la sortie d'un émetteur GSM (Tx GSM). La voie de plus haute fréquence, 411, du diplexeur 410 est reliée à l'entrée d'un module hybride de duplexage/diplexage 430. Ce dernier a pour fonction de séparer une bande composite comprenant la bande DCS et la sous-bande de la voie d'émission (voie montante) UMTS, d'une part, et la sous-bande de la voie de réception ( voie descendante) UMTS, d'autre part. En pratique cette fonction peut être assurée par un duplexeur UMTS classique séparant les voies montante et descendante par des filtres passe-bande. En effet, la bande du filtre passe-bande associé à la voie montante est généralement suffisamment large (au prix, le cas échéant, d'une légère adaptation du comosant existant) pour laisser également passer la bande DCS. Dans tous les cas, le module hybride 430 laisse passer sur la voie 431 la sous-bande 2110-2170 MHz (Rx UMTS) et sur la voie 432 la bande composite 1710-1980 MHz (DCS et Tx UMTS). La voie 431 du module 430 est reliée à l'entrée d'un récepteur UMTS. En revanche la voie 432 est connectée à la voie commune d'un diplexeur 415 ayant pour fonction de séparer la sous-bande de transmission (ou voie montante) UMTS de la bande DCS. Etant donné la proximité de la bande DCS (1710-1880 MHz) et de la sous-bande UMTS (1920-2170 MHz), les filtres passe-bande du diplexeur sont choisis très sélectifs en fréquence. Ils sont avantageusement réalisés par des filtres à ondes de surface ou SAW (Surface Acoustic Waves) permettant d'obtenir des filtres d'ordre élévé. Alternativement, ils pourront être réalisés sous la forme de filtres diélectriques, de manière connue en soi. La voie de plus basse fréquence, 417, du diplexeur 415 est connectée au point commun d'un commutateur 440 du type « une entrée / deux sorties». Les « sorties » de ce commutateur sont reliées respectivement à l'entrée (Rx DCS) d'un récepteur DCS et à la sortie (Tx DCS) d'un émetteur DCS. La sortie haute fréquence 416 du diplexeur 415 est reliée quant à elle à la sortie d'un émetteur UMTS.

Selon une variante de réalisation avantageuse, les voies 411, 412 du diplexeur 410 et les voies 416, 417 du diplexeur 415 sont pourvus de simples commutateurs de type « marche/ arrêt », comme décrit plus loin. Il est ainsi possible d'isoler certaines parties du système non utilisées dans un mode de fonctionnement donné et d'éviter des pertes dues aux fuites dans les diplexeurs. Par exemple, si le système fonctionne en mode GSM seul, le commutateur sur la voie 411 sera ouvert et celui sur la voie 412 sera fermé. S'il fonctionne en mode DCS seul, les commutateurs sur les voies 412 et 416 seront ouverts et les commutateurs sur les voies 411 et 417 seront fermés. Enfin, s'il fonctionne en mode UMTS seul, les commutateurs sur les voies 412 et 417 seront ouverts et ceux sur les voies 411 et 416 seront fermés. En outre, des commutateurs de type « marche/ arrêt » pourront être prévus pour court-circuiter un diplexeur s'il n'est pas utilisé, de manière à réduire encore les pertes. Ainsi, par exemple, en mode DCS seul on pourra relier directement la voie commune de 415 à la voie 417 et, en mode UMTS seul, la voie commune à la voie 416.

Le système d'émission/ réception représenté permet d'effectuer des mesures en réception DCS alors que le mobile est en communication en mode UMTS compressé. Plus précisément, le diplexeur 415 autorise simultanément une réception en mode DCS à travers le commutateur 420 et une transmission en mode UMTS. Il est ainsi possible d'effectuer les mesures en réception DCS tout en continuant à transmettre normalement sur la voie montante UMTS. Le mode compressé n'affecte alors que la voie UMTS descendante. Si les sorties du duplexeur 410 sont pourvues de commutateurs, on réduit avantageusement les pertes dans ce mode de fonctionnement en ouvrant le commutateur sur la sortie 412. Les autres commutateurs sont fermés.

En outre, le système d'émission/ réception représenté permet, comme dans l'état de la technique, d'effectuer des mesures en réception GSM alors que le mobile est en communication en mode UMTS compressé. Dans ce cas, si les sorties du duplexeur 415 sont munies de commutateurs, celui sur la voie 417 sera ouvert et les autres commutateurs seront fermés.

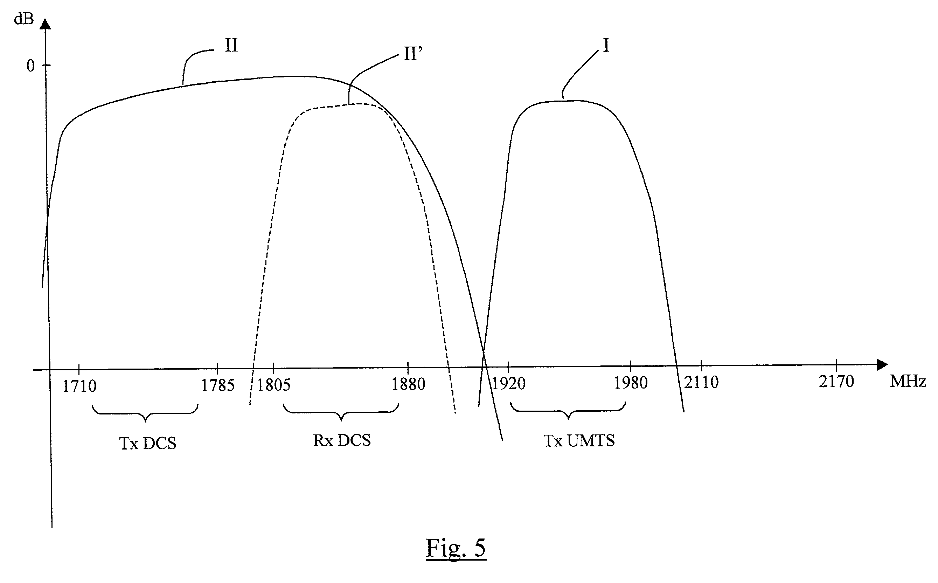

La Fig. 5 représente les caractéristiques des filtres passe-bande du diplexeur 415. On a désigné respectivement par I et II la caractéristique du filtre associé à la sortie 416 (sous-bande de transmission UMTS) et la caractéristique II du filtre associé à la sortie 417 (bande DCS).

On sait qu'il est difficile d'obtenir un filtre passe-bande présentant à la fois une bonne sélectivité en fréquence et une caractéristique plate dans la bande passante. Afin de pallier cette difficulté, dans une seconde variante de réalisation, le filtre passe-bande associé à la sortie 417 possède une caractéristique commutable. Plus précisément, si le système fonctionne en mode UMTS seul ou en mode DCS seul, les caractéristiques des filtres en question sont bien celles indiquées respectivement par I et II. En revanche, si l'on souhaite effectuer des mesures de réception DCS en mode UMTS compressé, on reconfigure le filtre associé à la sortie 417 de sorte que sa caractéristique devienne celle représentée en trait interrompu, désignée par II'. On assure de cette manière à la fois la grande sélectivité nécessaire en mode compressé (caractéristiques I et II') et un bon conditionnement du filtre en mode DCS seul (caractéristique II). Selon un exemple de réalisation, la commutation de la caractéristique II vers II' passe par une réduction du nombre de pôles. La caractéristique II pourra notamment être celle d'un filtre à trois pôles et la II' pourra être celle d'un filtre à deux pôles. Dans ce dernier cas, la caractéristique II' est relevée par rapport à la caractéristique II.

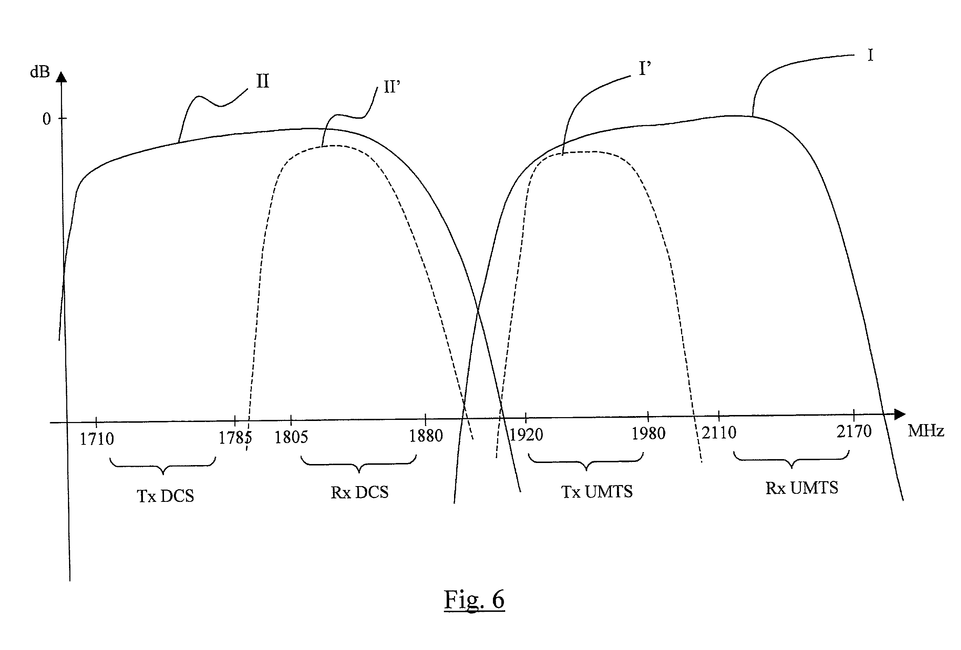

La Fig. 6 illustre une troisième variante de réalisation des filtres passe-bande. Cette variante diffère de la précédente en ce que la caractéristique I du filtre associé à la voie 416 laisse passer toute la bande UMTS. En effet, étant donné que le duplexeur 430 élimine ensuite sur cette voie la sous-bande de réception UMTS (voie descendante), il n'est pas nécessaire que le filtre associé à la voie 416 ait une bande limitée à celle de la voie montante.

Selon une quatrième variante avantageuse de réalisation, les filtres passe-bande associés aux sorties 416 et 417 présentent des caractéristiques commutables. Ainsi, si le système fonctionne en mode UMTS seul ou en mode DCS seul, les caractéristiques des filtres en question sont bien celles indiquées par I et II. En revanche, si l'on souhaite effectuer des mesures de réception DCS en mode UMTS compressé, on reconfigure les filtres de sorte que leurs caractéristiques des filtres deviennent celles représentées en trait interrompu et désignées par I', II'. On concilie ainsi comme précédemment la sélectivité nécessaire en mode compressé et le bon conditionnement des filtres en mode normal.

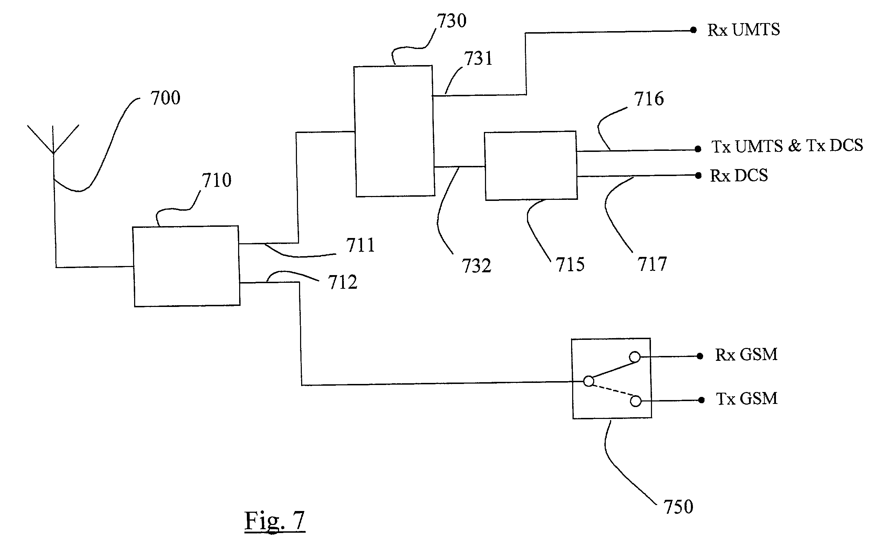

La Fig. 7 représente un système d'émission/ réception multibande selon un second mode de réalisation de l'invention. Le système comprend un premier diplexeur 710 relié par sa voie commune à l'antenne 700, ayant pour fonction de séparer la bande GSM et la bande DCS/UMTS. La voie 711 correspond à la bande DCS/ UMTS et la voie 712 correspond à la bande GSM. La voie 712 est connectée au point commun (ou « entrée ») d'un commutateur du type à « une entrée / deux sorties » laissant passer soit le signal d'un émetteur GSM (Tx GSM) sur la voie 712, soit le signal reçu sur cette voie vers un récepteur GSM (Rx GSM). La voie 711 est reliée à la voie commune d'un module hybride de diplexage/ duplexage 730, qui peut être constitué comme on l'a vu plus haut par un simple duplexeur UMTS. Le module hybride 730 est identique au module 430 de la Fig. 4. Il a pour fonction de laisser passer sur la voie 732 la sous-bande 2110-2170 MHz (Rx UMTS) et sur la voie 731 la bande composite 1710-1980 MHz (DCS et Tx UMTS). Cependant, à la différence du système de la Fig. 4, la voie 732 est connectée à la voie commune d'un diplexeur à caractéristique commutable 715 laissant passer sur la voie 716 (notée Tx UMTS & Tx DCS) soit la sous-bande d'émission (1920-1980 MHz) de la bande UMTS soit la sous-bande d'émission (1710-1785 MHz) de la bande DCS. En outre, le diplexeur 715 laisse passer sur la voie 717 (notée Rx DCS) la sous-bande de réception DCS. L'avantage du second mode de réalisation par rapport au premier (Fig. 4) est de permettre d'utiliser un seul amplificateur sur la voie Tx UMTS & Tx DCS au lieu de deux amplificateurs distincts respectivement sur les voies Tx UMTS et Tx DCS.

Selon une autre variante de réalisation, le diplexeur 715 laisse passer sur la voie 716 soit la bande UMTS (1920-2170 MHz) soit la sous-bande d'émission de la bande DCS, la sous-bande de réception UMTS étant arrêtée par le module hybride 730.

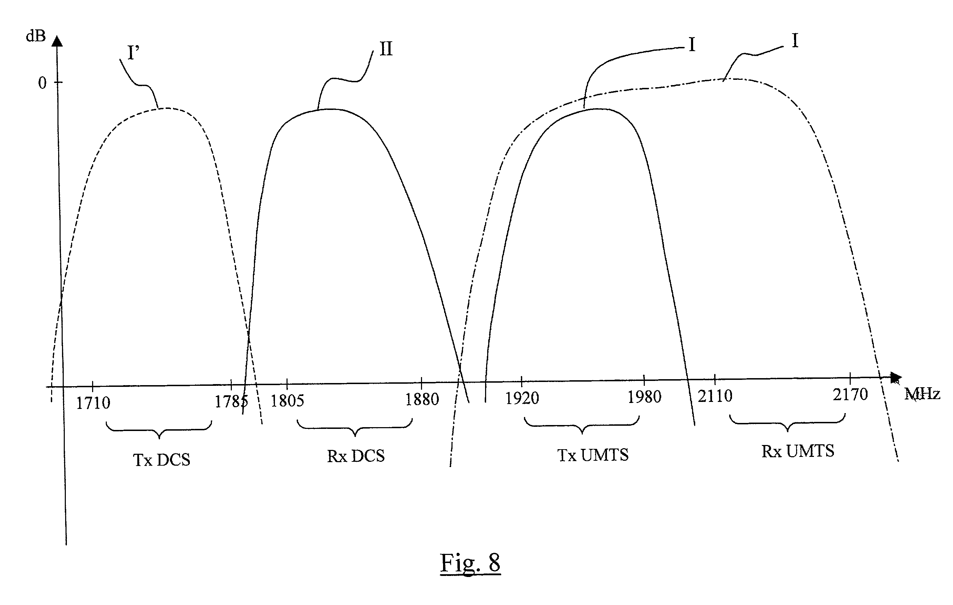

La Fig. 8 représente les caractéristiques des filtres passe-bande du diplexeur 715. Les caractéristiques I et I' sont celles du filtre commutable sur la voie 716 et la caractéristique II est celle du filtre sur la voie 717. Si le terminal mobile fonctionne en mode UMTS seul, le filtre sur la voie 716 aura, selon la variante retenue, la caractéristique I en trait continu ou en celle représentée tireté-point. En revanche, si le terminal effectue une mesure dans la bande de réception DCS en fonctionnant en mode UMTS compressé, le filtre sur la voie 716 aura la caractéristique I'.

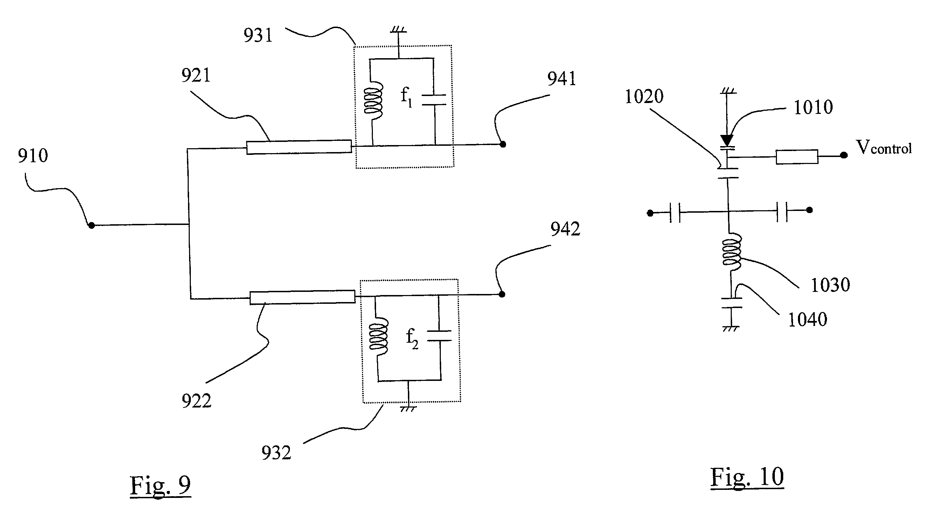

Les diplexeurs utilisés, en particulier les diplexeurs 415 et 715 emploient avantageusement des filtres passe-bande à ondes de surface (SAW) ou diélectriques. La Fig. 9 illustre schématiquement un tel diplexeur. Les filtres 931 et 932 délimités par des lignes fermées en pointillés sont par exemple des filtres SAW (représentés ici sous forme de schéma électrique équivalent) ayant des fréquences de résonnance respectives f₁ et f₂. En outre, le diplexeur comprend une première ligne quart d'onde 921 et une seconde ligne quart d'onde 922 de sorte que l'impédance à la fréquence f₁ de la branche haute vue du point 910 et l'impédance à la fréquence f₂ de la branche basse vue du même point soient très élevées.

Afin de faire varier les caractéristiques des filtres du diplexeur on peut prévoir d'adjoindre aux filtres SAW, en parallèle ou en série, des capacités et/ou des inductances commutables. Les commutateurs utilisés pourront être constitués de diodes PIN commandées en tension. Alternativement ou conjointement, on pourra adjoindre aux filtres SAW des capacités commandables en tension ou varicaps. La Fig. 10 montre le schéma électrique équivalent d'un filtre SAW en parallèle avec une varicap. La capacité de la diode 1010 est commandée par une tension inverse de commande V_{control} et varie alors selon une loi du type k/(V₀+V_{control})^{α} où k, V₀ et α sont des constantes. La capacité 1020 permet de bloquer le courant de polarisation. Le circuit résonnant est constitué de la capacité variable de la diode 1010, des capacités 1020 et 1040 ainsi que de l'inductance 1030. En faisant varier V_{control}, on modifie la fréquence de résonnance du filtre. De même, si une varicap est placée en série avec le filtre SAW, on peut, en faisant varier sa tension de polarisation, modifier la fréquence d'antirésonnance du filtre. Il est ainsi possible de construire un filtre passe-bande à fonction de transfert commutable.

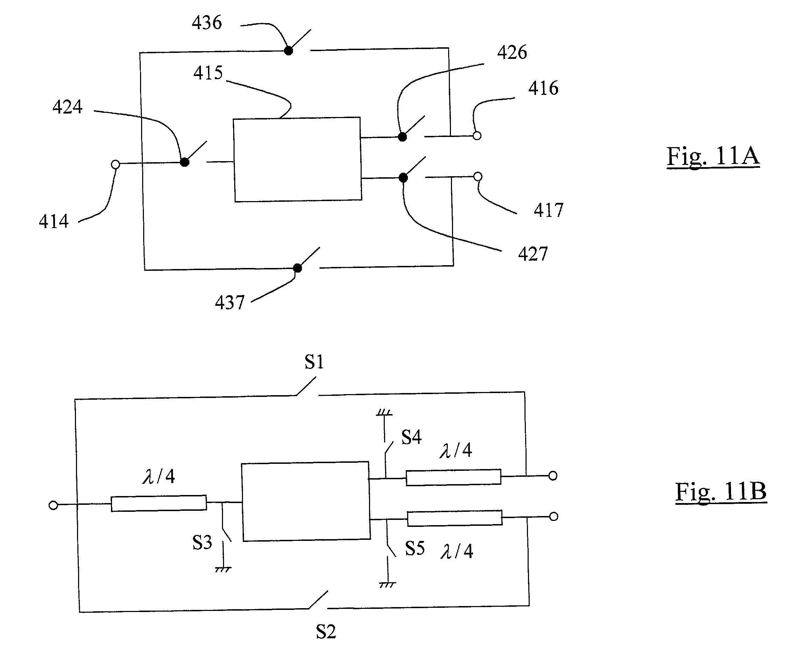

La Fig. 11A représente de manière schématique un diplexeur équipé de commutateurs de type « marche/arrêt » permettant le passage d'un mode de fonctionnement comme indiqué plus haut. Le diplexeur représenté en Fig. 11A est exemple le diplexeur 415 de la Fig. 4. Sur chacune des voies 414, 416, 417 du diplexeur sont placés des commutateurs notés respectivement 424, 425, 426. En outre, deux commutateurs 436 et 437 peuvent être prévus de manière à court-circuiter la voie commune 414 avec respectivement la première voie 416 et la seconde voie 417.

La Fig. 11B indique un exemple de réalisation du diplexeur équipé de commutateurs de la Fig. 11A. Les éléments S1 à S5 représentés sont des diodes PIN ou des transistors FET. Les commutateurs 424, 426 et 427 sont constitués chacun d'une ligne quart d'onde et d'une diode PIN (ou un transistor FET). Lorsqu'une de ces diodes est polarisée en direct, la faible impédance entre son anode et la masse est transformée en haute impédance par la ligne quart d'onde. La voie correspondante présente une impédance élevée. Réciproquement, lorsque l'un de ces diodes est polarisée en inverse, l'impédance d'entrée de la voie correspondante est faible.

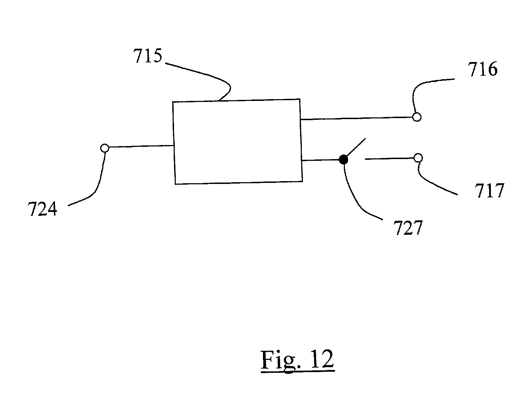

Bien entendu, de la même façon, les différents diplexeurs de la Fig. 4 ou de la Fig. 7 ou certains d'entre eux seulement peuvent être équipés de commutateurs, de manière à réduire les pertes dans les différents modes de fonctionnement. Selon le cas, certains commutateurs peuvent être omis. On a ainsi représenté en Fig. 12, le diplexeur 715 de la Fig. 7 équipé d'un commutateur « marche/arrêt » 727 sur sa seconde voie 717. Le commutateur 727 est fermé lorsque le terminal opère en bande DCS ou lorsqu'il opère en bande UMTS en effectuant des mesures de réception DCS. Il est ouvert lorsque le diplexeur opère en mode UMTS seul.

## Revendications

1. Système d'émission/ réception pour un terminal mobile apte à pouvoir émettre et recevoir dans au moins une première et une seconde bandes de fréquence, chacune desdites bandes de fréquence comprenant une sous-bande d'émission et une sous-bande de réception, **caractérisé en ce qu'**il comprend au moins un module hybride de duplexage/ diplexage (430, 730) adapté à séparer sur une première voie (431, 731) la sous-bande de réception de ladite première bande de fréquence et, sur une seconde voie (432, 732) une bande composite comprenant ladite seconde bande de fréquence ainsi que la sous-bande d'émission de ladite première bande de fréquence, la seconde voie étant reliée à la voie commune d'un diplexeur (415, 715).

2. Système d'émission/ réception selon la revendication 1, **caractérisé en ce que** ledit diplexeur (415) est adapté à séparer sur une première voie (416) la sous-bande d'émission de ladite première bande de fréquence et, sur une seconde voie (417), ladite seconde bande de fréquence, ladite première voie étant reliée à la sortie d'un émetteur dans la première bande de fréquence.

3. Système d'émission/ réception selon la revendication 2, **caractérisé en ce que** la seconde voie dudit diplexeur est reliée à l'entrée d'un commutateur (420) du type à « une entrée/ deux sorties », les sorties du commutateur étant respectivement connectées à un émetteur et un récepteur dans la seconde bande de fréquence.

4. Système d'émission/ réception selon la revendication 2 ou 3, **caractérisé en ce qu'**il comprend un premier et un second commutateurs (426, 427) de type « marche/arrêt » sur la première (416) et la seconde (417) voies du diplexeur, le premier commutateur (426) étant ouvert et le second (427) fermé lorsque le terminal mobile fonctionne dans la seconde bande de fréquence, le premier commutateur (426) étant fermé et le second ouvert (427) lorsque le terminal mobile fonctionne dans la première bande de fréquence, les deux commutateurs (426, 427) étant fermés lorsque le terminal mobile effectue des mesures dans la seconde bande de fréquence en émettant dans la première bande de fréquence.

5. Système d'émission/ réception selon l'une des revendications 2 à 4, **caractérisé en ce que** le diplexeur présente sur sa seconde voie (417) une fonction de transfert commutable entre celle d'un premier filtre passe-bande (II) laissant passer la seconde bande de fréquence et celle d'un second filtre passe-bande (II') laissant seulement passer la sous-bande de réception de la seconde bande de fréquence, ladite fonction de transfert étant celle du premier filtre lorsque le terminal mobile fonctionne dans la seconde bande de fréquence et celle du second filtre lorsque le terminal effectue des mesures dans la seconde bande de fréquence en émettant dans la première bande de fréquence.

6. Système d'émission/ réception selon la revendication 1, **caractérisé en ce que** le diplexeur (715) présente sur une première voie (716) une fonction de transfert commutable entre celle d'un premier filtre passe-bande (I) laissant passer la première bande de fréquence ou seulement la sous-bande d'émission de cette dernière et celle d'un second filtre passe-bande (I') laissant seulement passer la sous-bande d'émission la seconde bande de fréquence.

7. Système d'émission/ réception selon la revendication 6, **caractérisé en ce que** ladite fonction de transfert est commutée sur celle du premier filtre (I) lorsque le terminal mobile fonctionne dans la première bande de fréquence ou émet dans cette dernière en effectuant des mesures dans la seconde bande de fréquence et est commutée sur celle du second filtre (I') lorsque le terminal mobile fonctionne dans la seconde bande de fréquence.

8. Système d'émission/ réception selon la revendication 6 ou 7, **caractérisé en ce que** le diplexeur comporte sur sa seconde voie (717) un commutateur (727) de type « marche/ arrêt », le commutateur étant fermé lorsque le terminal mobile fonctionne dans la seconde bande de fréquence ou lorsqu'il effectue des mesures dans la seconde bande de fréquence en émettant dans la première bande de fréquence et ouvert lorsqu'il fonctionne dans la première bande de fréquence.

9. Système d'émission/ réception selon l'une des revendications précédentes, **caractérisé en ce que** le diplexeur est réalisé au moyen de filtres à ondes de surface .

10. Système d'émission/ réception selon l'une des revendications précédentes, **caractérisé en ce que** le diplexeur est réalisé au moyen de filtres diélectriques.

11. Système d'émission/ réception selon l'une des revendications précédentes, **caractérisé en ce que** le la première bande de fréquence est la bande UMTS et la seconde bande de fréquence est la bande DCS.

12. Système d'émission/ réception selon la revendication 11, **caractérisé en ce que** le module hybride de duplexage/ diplexage (430, 730) est constitué d'un duplexeur UMTS.

13. Système d'émission/ réception selon la revendication 12, **caractérisé en ce qu'**il comprend en outre un second diplexeur (410, 710) adapté à séparer sur une première voie (411, 711) la bande DCS/UMTS et sur une seconde voie (412, 712) la bande GSM, ladite première voie étant reliée à la voie commune du duplexeur UMTS.

14. Système d'émission/ réception selon la revendication 13, **caractérisé en ce que** ladite seconde voie du second diplexeur est reliée à l'entrée d'un commutateur (450, 750) du type à « une entrée/ deux sorties », laissant passer soit un signal d'émission GSM soit un signal de réception GSM.

15. Système d'émission/ réception selon la revendication 13 ou 14, **caractérisé en ce que** les première et seconde voies du second diplexeur sont pourvues de commutateurs de type « marche/ arrêt ».
